(19) Europäisches Patentamt / European Patent Office / Office européen des brevets

(11) **EP 4 707 244 A1**

(12) **EUROPEAN PATENT APPLICATION**

(43) Date of publication:
**11.03.2026  Bulletin 2026/11**

(21) Application number: **24198565.4**

(22) Date of filing: **05.09.2024**

(51) International Patent Classification (IPC):
**C01G 53/05** *(2025.01)*    **C01G 53/84** *(2025.01)*
**C25B 1/04** *(2021.01)*    **C25B 1/21** *(2006.01)*
**C25B 9/21** *(2021.01)*

(52) Cooperative Patent Classification (CPC):
**C01G 53/05; C01G 53/84; C25B 1/01; C25B 1/04;
C25B 1/22; C25B 9/21; H01M 10/54;**
C01P 2002/52; C01P 2002/70; C01P 2004/61

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BASF SE**
**67056 Ludwigshafen am Rhein (DE)**

(72) Inventors:
• **Garsuch, Arnd**
  **67056 Ludwigshafen am Rhein (DE)**
• **Metzger, Lukas Karl**
  **67056 Ludwigshafen am Rhein (DE)**

• **Berk, Rafael Benjamin**
  **67056 Ludwigshafen am Rhein (DE)**
• **Eberle, Felix**
  **67056 Ludwigshafen am Rhein (DE)**
• **Braeuninger, Sigmar**
  **67056 Ludwigshafen am Rhein (DE)**
• **Ryll, Thomas Michael**
  **67056 Ludwigshafen am Rhein (DE)**
• **Pfenning, Toni**
  **67056 Ludwigshafen am Rhein (DE)**

(74) Representative: **BASF IP Association**
**BASF SE**
**GBI - Z078**
**67056 Ludwigshafen (DE)**

(54) **PROCESS FOR MAKING PRECURSORS OF CATHODE ACTIVE MATERIALS FOR LITHIUM-ION BATTERIES**

(57)    Process for making an (oxy)hydroxide of TM wherein TM is nickel or a combination of metals that comprises at least 60 mol-% nickel, referring to TM, and, optionally, at least one of cobalt and manganese, wherein said process comprises the steps of:

(a) providing an aqueous slurry containing water-soluble salts of metals that constitute TM and slurried particles of (oxy)hydroxide of TM', wherein TM' is nickel or a combination of metals that comprises at least 60 mol-% nickel, referring to TM', and providing water-soluble salts of TM dissolved in water or in aqueous slurry (a),

(b) providing an electrochemical cell comprising at least three compartments separated from each other by anion-exchange membranes, said compartments comprising anode and anolyte, aqueous slurry provided in step (a), and cathode and catholyte, respectively,

(c) passing aqueous slurry as provided in step (a) and, if applicable, aqueous solution of salts of TM through the middle compartment and

(d) applying an electrochemical current with a current density in the range of from 10 to 500 mA/cm$^2$,

(e) removing (oxy)hydroxide of TM from the electrochemical cell

EP 4 707 244 A1

**Description**

The present invention is directed towards a process for making an (oxy)hydroxide of TM wherein TM is nickel or a combination of metals that comprises at least 60 mol-% nickel, referring to TM, and, optionally, at least one of cobalt and manganese, wherein said process comprises the steps of:

(a) providing an aqueous slurry containing water-soluble salts of metals that constitute TM' and slurried particles of (oxy)hydroxide of TM', wherein TM' is nickel or a combination of metals that comprises at least 60 mol-% nickel, referring to TM', and providing water-soluble salts of metals constituting TM dissolved in water or in aqueous slurry (a),
(b) providing an electrochemical cell comprising at least three compartments separated from each other by anion-exchange membranes, said compartments comprising anode and anolyte, aqueous slurry provided in step (a), and cathode and catholyte, respectively,
(c) passing slurry as provided in step (a) and said dissolved salts of metals constituting TM through the middle compartment and
(d) applying an electrochemical current with a current density in the range of from 10 to 500 mA/cm$^2$,
(e) removing (oxy)hydroxide of TM from the electrochemical cell.

Lithium-ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides.

The cathode material is of crucial importance for the properties of a lithium-ion battery. Lithium-containing mixed transition metal oxides have gained particular significance, for example spinels and mixed oxides of layered structure, especially lithium-containing mixed oxides of nickel, manganese and cobalt; see, for example, EP 1 189 296. Such lithium-containing mixed oxides of nickel, manganese and cobalt are generally prepared in a two-stage process. In a first stage, a sparingly soluble salt of the transition metal(s) is prepared by precipitating it from a solution, for example a carbonate or a hydroxide. This sparingly soluble compound is in many cases also referred to as a precursor. In a second stage, the precursor is mixed with a lithium compound, for example $Li_2CO_3$, LiOH or $Li_2O$, and calcined at high temperatures, for example at 600 to 1100°C.

In the precursor manufacturing process, when performed by (co-)precipitation, usually the sulfates of transition metals such as nickel, cobalt and manganese are used as starting materials. However, this leads to the formation of stoichiometric amounts of alkali metal sulfate. The stoichiometric amounts of sulfate are undesired by-products that need to be disposed of.

In WO 2019/191837, a process is disclosed wherein cathode active materials are made from precursors that are made by oxidation of metals and simultaneous precipitation. The process, however, leads to disadvantages when manganese is present because under the prevailing alkaline conditions, manganese may be precipitated as $MnO_2$ that is not incorporated well into the precursor. In addition, the magnetic separation as suggested for the removal of unreacted metals does not work for many materials such as, but not limited to aluminum and manganese.

It was therefore an objective of the present invention to provide a process for precursor manufacture that avoids the formation of stoichiometric amounts of alkali metal sulfate.

Accordingly, the process defined above was found, hereinafter also referred to as inventive process or process according to the (present) invention. The inventive process may be carried out as a batch process or as a continuous or semi-batch process.

The inventive process comprises steps (a) to (e), hereinafter also referred to as (a), (b), (c), (d), and (e), respectively. Steps (a) to (e) shall be described in more detail below.

The inventive process is suitable for making particulate (oxy)hydroxides and oxides of TM wherein TM represents metals, and wherein TM is nickel or comprises nickel and at least one metal selected from cobalt and aluminum and manganese. Preferably, TM comprises at least 60 mol-% nickel. More preferably, TM comprises at least 60 mol-% nickel and at least one of manganese and aluminum.

In one embodiment of the present invention, particulate (oxy)hydroxide and oxides of TM are selected from hydroxides and oxyhydroxides and oxides of TM wherein TM is a combination of metals according to general formula (I)

$$(Ni_aCo_bMn_c)_{1-d}M_d \qquad (I)$$

with

a being in the range of from 0.6 to 0.95, preferably 80 to 94,
b being in the range of from zero to 0.2, preferably 0.01 to 0.12,
c being in the range of from zero to 0.2, preferably 0.02 to 0.10,
d being in the range of from zero to 0.1,

M is selected from Mg, Al, Ti, Zr, Mo, W, Al, Mg, Nb, and Ta, and combinations of at least two of the foregoing, preferably, M is selected from Mg and Al.

$a + b + c = 1$, and $c + d >$ zero.

Said particulate (oxy)hydroxide or oxide of TM may contain traces of further metal ions, for example traces of ubiquitous metals such as sodium, calcium, iron or zinc, as impurities but such traces will not be taken into account in the description of the present invention. Traces in this context will mean amounts of 0.05 mol-% or less, referring to the total metal content of TM.

In a special embodiment of the present invention, TM is nickel.

Particulate (oxy)hydroxide or oxide of TM is in particulate form. In one embodiment of the present invention, the mean particle diameter (D50) of particulate (oxy)hydroxide or oxide of TM is in the range of from 1 to 50 $\mu$m, preferably 2 to 20 $\mu$m, more preferably 2.5 to 7 $\mu$m. The mean particle diameter (D50) in the context of the present invention refers to the median of the volume-based particle diameter, as can be determined, for example, by light scattering. In one embodiment, the particulate (oxy)hydroxides and oxides of TM have a monomodal particle diameter distribution. In other embodiments, the particle distribution of the particulate (oxy)hydroxides and oxides of TM may be bimodal, for example with one maximum in the range of from 1 to 5 $\mu$m and a further maximum in the range of from 7 to 16 $\mu$m. Monomodal is preferred.

In another embodiment of the present invention the mean particle diameter (D50) of particulate (oxy)hydroxide or oxide of TM is in the range of from 1 to 7 $\mu$m, preferably 2 to 6 $\mu$m, more preferably 3 to 5 $\mu$m.

The particle shape of the secondary particles of said particulate (oxy)hydroxides and oxides of TM is preferably spheroidal, that are particles that have a spherical shape. Spheroidal shall include not just those which are exactly spherical but also those particles with a form factor in the range of from 0.7 to 1 and an axis ratio of the bounding box in the range of from 1.00 to 1.25. To determine the axis ratio of the bounding box of a specific particle, the smallest possible rectangular bounding box is set around the top view SEM image of a particle. The axis ratio is calculated from the length of the two sides $a_1$ and $a_2$ (with $a_1 \geq a_2$) by: axis ratio of the bounding box = $a_1/a_2$.

To determine form factor and axis ratio of samples, both properties are first determined for at least 50 individual particles of each sample and then averaged. The form factor of the individual particles is calculated from the perimeter and area determined from top view SEM images: Form factor = $(4\pi \cdot \text{area})/(\text{perimeter})^2$. While a perfect sphere would possess a form factor of 1.0, any deviation from perfect sphericity leads to form factors below 1.0.

In one embodiment of the present invention, said particulate (oxy)hydroxides and oxides of TM are comprised of secondary particles that are composed of primary particles. Preferably, said precursor is comprised of spherical secondary particles that are agglomerates of primary particles. Even more preferably, said precursor is comprised of spherical secondary particles that are agglomerates of plate-shaped, rod-shaped or needle-shaped primary particles or platelets.

In one embodiment of the present invention, said particulate (oxy)hydroxides and oxides of TM may have a particle diameter distribution span in the range of from 0.9 to 2.0, the span being defined as [(D90) - (D10)] divided by (D50), all being determined by LASER analysis. In another embodiment of the present invention, said precursor may have a particle diameter distribution span in the range of from 1 to 4.

In one embodiment of the present invention the specific surface (BET) of said precursor is in the range of from 2 to 15 m$^2$/g or even 15 to 100 m$^2$/g, determined by nitrogen adsorption, for example in accordance with to DIN-ISO 9277:2003-05.

In step (a), an aqueous slurry containing slurried particles of (oxy)hydroxide of TM', wherein TM' is nickel or a combination of metals that comprises at least 60 mol-% nickel, referring to TM'. For example, in embodiments where an (oxy)hydroxide of nickel and cobalt in a molar ratio in the range of from 3:1 to 10:1 is desired, an aqueous solution of water-soluble salts of nickel and cobalt in the respective molar ratio in the range of from 3:1 to 10:1 is provided. In embodiments wherein TM is nickel, a slurry of nickel (oxy)hydroxide or NiO is provided.

In one embodiment of the present invention, water-soluble salts of metals that constitute TM are dissolved in slurry as provided in step (a).

"Water-soluble" in the context of the present invention shall mean that the solubility of the respective salt in distilled water at 25°C is at least 10 g/l. Although many salts fulfill that condition, for example the acetates, chlorides, nitrates and sulfates, the sulfates of nickel and transition metals such as manganese, cobalt and the like as well as of aluminum (which is not a transition metal) are preferred.

Aqueous slurry provided in step (a) may have a TM concentration in the range of from 0.1 to 2.0 mol/l, preferred from 0.15 to 1 mol/l, more preferred in the range from 0.2 to 0.75 mol/l. In another embodiment of the present invention, aqueous slurry provided in step (a) may have a concentration of TM in the range of from 0.02 up to 0.1 mol/l, for example 0.099 mol/l as upper limit. Especially when manganese is present it may be advantageous to provide a diluted solution in step (a). Said concentration refers to the salts as dissolved.

In an alternative embodiment, a separate aqueous solution of water-soluble salts of TM is provided.

Aqueous slurry as provided in step (a) contains slurried particles of (oxy)hydroxide of TM' which may be the same as TM or different, preferably the same. Such slurried particles of (oxy)hydroxide of TM' have an average diameter (D50) in the range of from 2 to 6 $\mu$m, preferably 4 to 5 $\mu$m, as determined by Laser diffraction or Scanning Electron Microscopy imaging ("SEM"). Such particles may serve as seed particles and lead to a better morphology of (oxy)hydroxide of TM.

In one embodiment of the present invention the slurry from step (a) has a concentration of 100 to 300 g particles per liter, preferably 150 to 250 g particles per liter.

In one embodiment of the present invention TM and TM' are the same - thus, they have the same composition. In another embodiment of the present invention, TM and TM' are similar, they comprise the same elements, and the nickel content differs by 10 mol-% or less referring to TM.

In embodiments wherein TM and TM' are different, strictly speaking TM in precipitated (oxy)hydroxide and in the dissolved are slightly different and TM' has a certain influence on the overall composition. Since precipitation in step (d) dominates the composition of the precursor particles, such difference is neglected in the context of the present invention.

Aqueous slurry or aqueous solution or both provided in step (a) further contain an alkali metal salt, preferably with the same counteranion as water-soluble salt(s) of metals that constitute TM. Preferred alkali metal salts are the sodium salts. Particularly preferred salt is sodium sulfate.

In one embodiment of the present invention, the concentration of alkali metal salt in aqueous slurry or aqueous solution as provided in step (a) is in the range of from 0.1 to 2.0 mol/l, preferred 0.15 to 1 mol/l, more preferred in the range from 0.2 to 0.75 mol/l. In another embodiment of the present invention, the concentration of alkali metal salt in aqueous solution as provided in step (a) is in the range of from 0.02 up to 0.1 mol/l, for example 0.099 mol/l as upper limit.

In one embodiment of the present invention, aqueous slurry or solution provided in step (a) has a concentration of TM in the range of from 0.02 up to 0.1 mol/l and a concentration of alkali metal salt of from 0.1 to 2.0 mol/l.

Aqueous slurry provided in step (a) may have a pH value above 7, for example in the range of from 7 to 12.

In one embodiment of the present invention, aqueous slurry provided in step (a) may contain one or more additives, for example a complexing agent such as, but not limited to ammonia. In other embodiments, aqueous slurry provided in step (a) does not contain any additive.

Step (b) includes providing an electrochemical cell comprising at least three compartments separated from each other by anion-exchange membranes, said compartments comprising anode and anolyte, aqueous slurry provided in step (a), and cathode and catholyte, respectively. The compartments may have the same size or different sizes. Aqueous slurry as provided in step (a) is in the compartment that is located between anode and cathode, and said compartment is also referred to as "middle compartment".

Examples of anion-exchange membranes are polymer membranes formed by an organic polymer backbone with covalently attached cationic groups. Cationic groups are alkylated quaternary ammonium groups linked to polymer backbones of polystyrene, polysulfone, poly(ethersulfone), or poly(phenylene oxide) through benzylic methylene groups. Preferred cationic groups are trimethylammonium groups.

Suitable thicknesses of anion-exchange membranes may be in the range of from 50 to 200 $\mu$m.

A particularly preferred example of anion-exchange membranes is commercially available as Fumasep FAB-PK 130, a PK-reinforced membrane. PK stands for polyether ether ketone fabric.

Examples of suitable materials for the oxygen evolution reaction (OER) anode are: DSA-electrodes, DSA-electrodes with a iridium- or iridium oxide-coating, iridium-oxide-coating being preferred. DSA electrodes are so-called dimensionally stable anodes. They are based on titanium coated with iridium or iridium oxide. Ruthenium/ruthenium oxide can also be part of the coating.

In an alternative cell design, iridium-containing DSA-electrodes can be replaced by a nickel anodes. In this particular design, the occurring oxidation reaction on the anode side will be the oxidative dissolution of nickel. Nickel salt, preferably nickel sulfate will be formed as reaction product.

Examples of suitable materials for the cathode are steel and stainless steel, for example SS36, with stainless steel being preferred.

The compartment that contains aqueous solution provided in step (a) is located between the compartment that contains anode and anolyte on one side ("anode compartment") and cathode and catholyte on the other side ("cathode compartment"), and it is separated from the anode compartment and from the cathode compartment with anion exchange membranes. The compartment that contains aqueous solution provided in step (a) is designed to allow a constant flow of solution provided into and through the electrochemical cell.

The dimensions of the compartments may be selected in a wide range. In one embodiment of the present invention, the volume of the cathode compartment is in the range of from one to twenty liters, preferably from two to ten liters. In one embodiment of the present invention, the volume of the anode compartment is in the range of from one to twenty liters, preferably from two to ten liters. In one embodiment of the present invention, the volume of the compartment that contains aqueous solution provided in step (a) is in the range of from one to 40 liters, preferably two to twenty liters.

In laboratory experiments, the volume of the cathode compartment may be in the range of from 40 to 50 ml. In such embodiments, the volume of the anode compartment is in the range of from 40 to 50 ml. In such embodiments, the volume of the compartment that contains aqueous solution provided in step (a) is in the range of from 70 to 120 ml.

In one embodiment of the present invention, the electrochemical cell as provided in step (b) has an active cell area in the range of from 50 cm$^2$ to 3 m$^2$. The active cell area is defined as area of two electrodes - anode and cathode - facing each other.

In one embodiment of the present invention, each compartment is shaped in a way that respective aqueous medium can pass it, for example in an intermittent or continuous flow. Preferably, such continuous or intermittent flow neither allows short-cuts nor dead space, or at least as little dead space as possible, for example 1 vol-% of the compartment volume or less.

Examples of anolytes are aqueous solutions of alkali metal sulfate, for example $Na_2SO_4$ in embodiments with DSA anodes. The concentration may be in the range of from 0.1 to 2 molar with respect to sulfate, 0.5 to 1.5 molar being preferred. Due to the electrochemical reaction, the pH value of the anolyte drops to 0.5 to 3.

Examples of anolytes are aqueous solutions of sulfuric acid when nickel electrodes are employed. The concentration may be in the range of from 0.1 to 1 molar with respect to sulfate, with 0.05 to 0.35 molar being preferred. Due to the electrochemical reaction, the pH value of the anolyte drops to 0.2 to 1.

Examples of catholytes are aqueous solutions of alkali metal hydroxide, for example NaOH. The concentration may be in the range of from 0.05 to 1 molar, preferred are 0.1 to 0.5 molar. The pH value of the catholyte is preferably higher than 9, for example 10 to 14.

Step (c) of the inventive process includes passing slurry as provided in step (a) through the middle compartment. Said passing may be performed continuously, intermittently or by simply replacing aqueous medium from the middle compartment through discharging and re-charging. Although it is possible to run the inventive process batch-wise, a continuous mode of operation is preferred. While a batch-wise operation is possible for laboratory-scale experiments, for example with one liter of slurry to be provided in step (a), a continuous or intermittent operation of step (c) is preferred. In step (c), a passing rate from 10 to 400 liters per hour, preferred from 60 to 90 liters per hour may be achieved.

In embodiments where water-soluble salts of TM are provided in an aqueous solution such aqueous solution is passed through the middle compartment as well, with mixing prior to passing or during passing in accordance with step (c).

A lower passing rate may result in a strong depletion of metals that constitute TM. It may further result in a deposition of residues of (oxy)hydroxide of TM in the electrochemical cell.

Too high a passing rate may result in turbulences that are disadvantageous in the particle growth in the subsequently described steps. Too high a passing rate may further limit the particle growth.

Step (d) includes applying an electrical current with a current density of from 10 to 500 mA/cm$^2$, preferably from 25 to 400 and more preferably from 50 to 200 mA/cm$^2$. Depending on the geometry of the cell, e.g., the distance of anode and cathode, such current density may result in a voltage in the range of from 2 to 20 V, preferably from 2 to 10 V and more preferably from 3 to 7 V.

In other embodiments, such current density may result in a voltage in the range of from 20 to 30 V,

In one embodiment of the present invention, in step (d) a current density of 50 mA/cm2 is applied. Such current density results in cell voltages ranging from 5 to 7.5 V Said voltage may be constant or vary in a range of from 6.0 ± 0.5 V in a steady state-operation.

While performing step (d), several chemical reactions may be observed. Oxygen is formed at the anode, and the pH value may drop to 2.5 or lower, for example to 1.5. A diluted sulfuric acid is formed that may be used for other steps in battery material manufacture, for example in dissolution of nickel-containing ores, nickel metal, or in the leaching of spent batteries.

In a specific embodiment, with nickel metal serving as anode, nickel cations are formed at the anode. The pH value is then preferably below 1, for example to 0.6. An acidic nickel sulfate solution is formed that may be used in subsequent steps in the middle compartment.

In one embodiment of the present invention, a hydrogen oxidation reaction is performed at the anode. For this purpose, hydrogen gas is introduced at the anode and oxidized to H$^+$.

At the cathode, hydrogen gas is formed, and the pH value adopts values as from 11 to 14, preferably from 12 to 13.

While performing step (d), hydroxide ions migrate from the catholyte through the anion exchange membrane into the middle compartment. As a consequence, a hydroxide of TM precipitates. Without wishing to be bound by any theory, we assume that hydroxide ions are immediately consumed by TM and removed by precipitation. A significant increase in pH value is hard to detect. In order to secure electroneutrality, counteranion of TM, preferably sulfate, migrates through the anion exchange membrane into the anolyte. Upon complete consumption of TM the pH value raises considerably.

In one embodiment of the present invention, the electric conductivity of the anolyte is in the range of from 30 to 150 mS/cm during step (d).

In one embodiment of the present invention, the electric conductivity of the catholyte is in the range of from 30 to 150 mS/cm during step (d).

In one embodiment of the present invention, the electrolyte in the middle compartment has a conductivity in the range of from 30 to 150 mS/cm. In an alternative embodiment, with a higher dilution, the electrolyte in the middle compartment has a conductivity in the range of from 10 to 30 mS/cm.

In one embodiment of the present invention, the temperature of anolyte, catholyte and slurry provided in step (a) is in the range of from ambient temperature to 70°C. The temperature refers to the performance of step (d). It is preferred that the difference in temperature in the three compartments is less than 5°C at a given time.

A steady state in step (d) may be achieved by circulating each of filtrate, anolyte and catholyte at least in part, and adding fresh alkali metal salt such as $Na_2SO_4$ to anolyte and sulfate of TM to the solution to be fed. The generation of filtrate is described below.

As a result, a slurry with a higher particles content than slurry as provided in step (a) is generated in step (d).

In one embodiment of the present invention, slurry generated in step (d) is at least partially moved in a loop to repeatedly pass through the middle compartment. By this embodiment, a higher residence time may be achieved, and the particle growth is enhanced. In other embodiments, slurry generated in step (d) is completely passed to step (e).

In step (e), (oxy)hydroxide of TM is removed from the electrochemical cell, preferably with the aqueous medium of the middle compartment. Suitable measures are a solid-liquid-separation, for example a filtration, or a concentration of the solids, for example by decantation or with the help of a centrifuge, followed by a filtration. Suitable examples of filtration devices are vacuum disc filters, filter presses such as plane filter and plate filter presses, and belt filters. In laboratory scale, Büchner filters are suitable as well.

A solid is obtained and an aqueous medium which is hereinafter also referred to as filtrate. The filtrate usually contains some alkali metal sulfate and some water-soluble salt(s) of TM.

Further operations may include drying, for example at reduced pressure ("in vacuo"), for example 1 to 100 mbar or elevated temperature, for example 50 to 150°C, or combination of elevated temperature and reduced temperature. When drying is performed under air, readily oxidizable metals such as manganese may be oxidized, for example under formation of $Mn^{3+}$ or $Mn^{4+}$.

A powder is obtained that is an (oxy)hydroxide of TM. Such (oxy)hydroxide is suitable as precursor for a cathode active material.

Precursor as generated by the inventive process is an aspect of the present invention as well.

The invention is further illustrated by working examples.

All experiments were carried out in the following electrochemical cell: ICI FM01 having an active cell area of 64 $cm^2$. Anode compartment: 45 ml, cathode compartment: 45 ml, volume of the compartment that contains aqueous slurry provided in step (a1.1): 85 ml. Membranes: commercially available membrane - Fumasep FAP-PK-130.

All experiments were carried out in the following electrochemical cell: ICI FM01 having an active cell area of 64 $cm^2$. Anode compartment: 45 ml, cathode compartment: 45 ml, volume of the compartment that contains aqueous slurry provided in step (a.1): 85 ml (middle compartment). Membranes: commercially available membrane - Fumasep FAP-PK-130

Example 1: Manufacture of a high-Ni NCM precursor (Ni-Co-Mn: 91 - 4.5 - 4.5)

Step (a.1): The following slurry and solutions were provided:

Slurry (a1.1), aqueous slurry of TM'$(OH)_2$ particles, TM' (Ni-Co-Mn: 91 - 4.5 - 4.5 by moles), 216 g/l, average diameter (D50) 4 $\mu$m, determined by SEM, and 0.25 mol/l $Na_2SO_4$
Aqueous solution (a1.2): 1.46 mol/l TM sulfate, TM is nickel: cobalt: manganese in a molar ratio of 91:4.5:4.5. Thus, TM = TM'.
Step (b.1): The above cell was provided. Anode: Ir-containing DSA, cathode: stainless steel SS316 mesh 1 mm
Anolyte - 1 mol/l aqueous $Na_2SO_4$ solution, catholyte - 0.5 mol aqueous NaOH solution

The cell temperature was set to 40°C.

Step (c.1): Slurry (a1.1) was passed through the middle compartment with a flow rate of 80 l/h. In addition, 172 g aqueous solution (a1.2) were added dropwise over a time period of 4 hours to the middle compartment, water was removed with the flow from slurry (a1.1).
Step (d.1): an electric current with a current density of 15 mA/$cm^2$ was applied.

More data is summarized in Table 1.

Table 1: Detailed data of Example 1

| Reaction Time | Voltage | pH | pH | pH | Conductivity | | |
|---|---|---|---|---|---|---|---|
| [h] | [V] | Anolyte | Middle compartment | Catholyte | Anolyte [mS/cm] | Middle compartment [mS/cm] | Catholyte [mS/cm] |
| 0.00 | 4.95 | 8.0 | 10.69 | 12.37 | 59.1 | 43.7 | 112 |
| 0.50 | 3.86 | 2.79 | 8.42 | 12.23 | 60.3 | 54.7 | 121 |
| 1.00 | 3.89 | 2.46 | 8.09 | 12.02 | 60 | 55.5 | 121 |
| 1.50 | 3.88 | 2.20 | 7.94 | 11.89 | 64.5 | 56.4 | 122 |
| 2.00 | 3.86 | 2.09 | 7.98 | 11.85 | 67 | 57.4 | 122 |
| 2.50 | 3.88 | 1.99 | 7.89 | 11.77 | 69.7 | 58.3 | 122 |
| 3.00 | 3.9 | 1.90 | 7.88 | 11.66 | 66.9 | 58.5 | 122 |
| 3.50 | 3.87 | 1.83 | 7.93 | 11.64 | 72.3 | 58.7 | 122 |
| 4.00 | 3.88 | 1.76 | 7.97 | 11.55 | 68.4 | 58.9 | 123 |
| Reaction Time refers to the start of step (d.1) | | | | | | | |

Step (e.1): The resultant slurry of a green-brown solid was removed from the cell. The green-brown solid was recovered by filtration and washing with distilled water, followed by drying at 120 °C under air. The analysis of the brown solid showed that i compositonwas Ni-Co-Mn(OH)$_2$, molar ratio of nickel : cobalt: manganese of 91 : 4.5 : 4.5. Particles with a diameter of from 10 to 20 $\mu$m can be detected. XRD data are displayed in Table 4.

Example 2: Electrochemical growth of pre-seeded high-Ni NCM precursor particles (Ni-Co-Mn: 91 - 4.5 - 4.5)

Step (a.2): step (a.1) was repeated but and 16 gram of an aqueous solution of ammonia (25 wt%) were added. Slurry (a2.1) was obtained,

Step (b.2): The above cell was provided. Anode: Ir-containing DSA, cathode: stainless steel SS316 mesh 1 mm

Anolyte - 1 mol/l aqueous Na$_2$SO$_4$ solution, catholyte - 0.5 mol aqueous NaOH solution The cell temperature was set to 40°C.

Step (c.2): Slurry (a2.1) was passed through the middle compartment with a flow rate of 80 l/h. In addition: 172 g aqueous solution (a1.2) and 10 ml of aqueous ammonia (25 wt%) were added dropwise over a time period of 4 hours to the middle compartment. Water was removed with the flow from slurry (a1.1).

Step (d.2): An electric current with a current density of 15 mA/cm$^2$ was applied.

More data is summarized in Table 2.

Table 2: Detailed data of Example 2

| Reaction Time | Voltage | pH | pH | pH | Conductivity | | |
|---|---|---|---|---|---|---|---|
| [h] | [V] | Anolyte | Middle compartment | Catholyte | Anolyte [mS/cm] | Middle compartment [mS/cm] | Catholyte [mS/cm] |
| 0.00 | 3.77 | 4.80 | 11.20 | 12.41 | 80.4 | 48.2 | 115 |
| 0.50 | 3.69 | 2.76 | 10.45 | 12.08 | 79.9 | 54.2 | 122 |
| 1.00 | 3.68 | 2.43 | 9.91 | 11.87 | 76.4 | 57.6 | 121 |
| 1.50 | 3.70 | 2.85 | 9.42 | 11.70 | 71.3 | 60.5 | 122 |

(continued)

| Reaction Time | Voltage | pH | pH | pH | Conductivity | | |
|---|---|---|---|---|---|---|---|
| [h] | [V] | Anolyte | Middle compartment | Catholyte | Anolyte [mS/cm] | Middle compartment [mS/cm] | Catholyte [mS/cm] |
| 2.00 | 3.69 | 2.10 | 8.99 | 11.59 | 72.7 | 62.9 | 122 |
| 2.50 | 3.70 | 2.00 | 8.63 | 11.52 | 75.6 | 64.4 | 122 |
| 3.00 | 3.69 | 1.92 | 8.39 | 11.46 | 76.9 | 65.6 | 123 |
| 3.50 | 3.71 | 1.84 | 8.51 | 11.38 | 84.5 | 66.2 | 123 |
| 4.00 | 3.71 | 1.78 | 8.68 | 11.40 | 76.0 | 66.4 | 124 |
| Reaction Time refers to the start of step (d.2) | | | | | | | |

Step (e.2): The resultant slurry of the green-brown solid was removed from the cell. The solid was recovered by filtration and washing with distilled water, followed by drying at 120 °C under air. The analysis of the brown solid showed it was Ni-Co-Mn(OH)$_2$, molar ratio of nickel : cobalt: manganese of 91 : 4.5 : 4.5. Particles with a diameter of from 10 to 20 $\mu$m were detected. XRD data are displayed in Table 4.

Example 3: Electrochemical growth of pre-seeded high-Ni NCM precursor particles (Ni-Co-Mn: 91 - 4.5 - 4.5)

Step (a.3): Step (a.1) was repeated but 16 gram of an aqueous solution of ammonia were added. Slurry (a3.1) was obtained.
Step (b.3): The above cell was provided.

Anolyte - 1 mol/l aqueous Na$_2$SO$_4$ solution, catholyte - 0.5 mol aqueous NaOH solution
The cell temperature was set to 40°C.
Step (c.3): Slurry (a3.1) was passed through the middle compartment with a flow rate of 80 l/h. In addition: 172 g aqueous solution (a1.2) and 10 ml of aqueous ammonia (25 wt%) were added dropwise over a time period of 4 hours to the middle compartment Water was removed with the flow from slurry (a1.1).
Step (d.3): An electric current with a current density of 50 mA/cm$^2$ was applied.

More data is summarized in Table 3.

Table 3: Detailed data of Example 3

| Reaction Time | Voltage | pH | pH | pH | Conductivity | | |
|---|---|---|---|---|---|---|---|
| [h] | [V] | Anolyte | Middle compartment | Catholyte | Anolyte [mS/cm] | Middle compartment [mS/cm] | Catholyte [mS/cm] |
| 0.00 | 6.22 | 6.00 | 11.31 | 12.60 | 74.7 | 45.8 | 106 |
| 0.50 | 5.95 | 2.25 | 11.62 | 12.21 | 67.0 | 51.5 | 121 |
| 1.00 | 5.91 | 1.93 | 10.95 | 11.99 | 75.1 | 51.8 | 122 |
| 1.50 | 5.88 | 1.74 | 10.59 | 11.76 | 78.2 | 52.8 | 122 |
| 2.00 | 5.92 | 1.57 | 10.30 | 11.59 | 86.9 | 53.6 | 122 |
| 2.50 | 6.03 | 1.47 | 10.14 | 11.48 | 94.1 | 54.2 | 123 |
| 3.00 | 6.15 | 1.37 | 9.96 | 11.42 | 90.6 | 55.5 | 123 |
| 3.50 | 6.39 | 1.30 | 9.88 | 11.39 | 85.7 | 55.9 | 124 |

(continued)

| Reaction Time | Voltage | pH | pH | pH | Conductivity | | |
|---|---|---|---|---|---|---|---|
| [h] | [V] | Anolyte | Middle compartment | Catholyte | Anolyte [mS/cm] | Middle compartment [mS/cm] | Catholyte [mS/cm] |
| 4.00 | 6.62 | 1.24 | 10.25 | 11.36 | 85.6 | 52.7 | 124 |
| Reaction Time refers to the start of step (d.3) | | | | | | | |

Step (e.3): The resultant slurry of the green-brown solid was removed from the cell. The solid was recovered by filtration and washing with distilled water, followed by drying at 120 °C under air. The analysis of the brown solid showed it was Ni-Co-Mn(OH)2, molar ratio of nickel : cobalt: manganese of 91 : 4.5 : 4.5. Particles with a diameter of from 1 to 50 μm can be detected. XRD data are displayed in Table 4.

Table 4: XRD data

| PCAM | Ni [mol-%] | Co [mol-%] | Mn [mol-%] | FWHM (o) 1 st reflection - I(001) | FWHM (o) 2nd reflection -I(100) or (010) | FWHM (o) 3rd reflection -I(011) or I(101) | FWHM (o) 4th reflection - I(012) or I(102) |
|---|---|---|---|---|---|---|---|
| Example 1 | 91 | 4.5 | 4.5 | 0.3582 | 0.1515 | 0.2556 | 0.3517 |
| Example 2 | 91 | 4.5 | 4.5 | 0.3494 | 0.1398 | 0.2451 | 0.3257 |
| Example 3 | 91 | 4.5 | 4.5 | 0.3596 | 0.1531 | 0.2714 | 0.3708 |
| Molybdenum was used as XRD source. | | | | | | | |

## Claims

1. Process for making an (oxy)hydroxide of TM wherein TM is nickel or a combination of metals that comprises at least 60 mol-% nickel, referring to TM, and, optionally, at least one of cobalt and manganese, wherein said process comprises the steps of:

   (a) providing an aqueous slurry containing water-soluble salts of metals that constitute TM and slurried particles of (oxy)hydroxide of TM', wherein TM' is nickel or a combination of metals that comprises at least 60 mol-% nickel, referring to TM', and providing water-soluble salts of TM dissolved in water or in aqueous slurry (a),
   (b) providing an electrochemical cell comprising at least three compartments separated from each other by anion-exchange membranes, said compartments comprising anode and anolyte, aqueous slurry provided in step (a), and cathode and catholyte, respectively,
   (c) passing aqueous slurry as provided in step (a) and, if applicable, aqueous solution of salts of TM through the middle compartment and
   (d) applying an electrochemical current with a current density in the range of from 10 to 500 mA/cm$^2$,
   (e) removing (oxy)hydroxide of TM from the electrochemical cell.

2. Process according to claim 1 wherein the slurried particles of (oxy)hydroxide of TM' as provided in step (a) have an average diameter (D50) in the range of from 2 to 6 μm.

3. Process according to claim 1 or 2 wherein the slurry in step (a) has a concentration of 150 to 250 g particles per liter.

4. Process according to any of the preceding claims wherein TM is nickel.

5. Process according to any of the preceding claims wherein TM and TM' are the same.

6. Process according to any of the preceding claims wherein the temperature of anolyte, catholyte and solution provided in step (a) is in the range of from ambient temperature to 70°C.

7. Process according to any of the preceding claims wherein TM is a combination of metals according to formula (I)

$$(Ni_aCo_bMn_c) \qquad (I)$$

with

a being in the range of from 0.6 to 0.95,
b being in the range of from 0.025 to 0.2,
c being in the range of from zero to 0.2, and

$$a + b + c = 1.$$

8. Process according to any of the preceding claims wherein the water-soluble salts are sulfates.

9. Process according to any of the preceding claims wherein at the anode, sulfuric acid is generated that is used for working up spent lithium-ion batteries or transformation of nickel ore to the respective sulfate.

10. Process according to any of the preceding claims wherein the (oxy)hydroxide of TM removed in step (e) has an average particle diameter (D50) in the range of from 1 to 50 $\mu$m.

11. Process according to any of the preceding claims wherein the (oxy)hydroxide of TM removed in step (e) has an average particle diameter (D50) in the range of from 2 to 8 $\mu$m.

## EUROPEAN SEARCH REPORT

**Application Number**

EP 24 19 8565

### DOCUMENTS CONSIDERED TO BE RELEVANT

| Category | Citation of document with indication, where appropriate, of relevant passages | Relevant to claim |
|---|---|---|
| Y | DE 198 42 658 A1 (TOSHIBA KAWASAKI KK [JP]) 1 April 1999 (1999-04-01)<br>* page 9, line 67 - page 10, line 1 *<br>* page 13, line 31 - page 14, line 3; figure 12; example 6 *<br>----- | 1-11 |
| Y | DE 199 21 313 A1 (STARCK H C GMBH CO KG [DE]) 9 November 2000 (2000-11-09)<br>* column 2, line 18 - line 27 *<br>* column 3, line 18 - line 22 *<br>* column 3, line 68 - column 4, line 10 *<br>----- | 1-11 |
| Y | EP 0 684 324 A1 (STARCK H C GMBH CO KG [DE]; FRAUNHOFER GES FORSCHUNG [DE]) 29 November 1995 (1995-11-29)<br>* example 2 *<br>----- | 1,4-7, 9-11 |
| Y | CN 111 477 986 A (UNIV CENTRAL SOUTH) 31 July 2020 (2020-07-31)<br>* the whole document *<br>----- | 1,4-11 |

**CLASSIFICATION OF THE APPLICATION (IPC)**

INV.
C01G53/05
C01G53/84
C25B1/04
C25B1/21
C25B9/21

**TECHNICAL FIELDS SEARCHED (IPC)**

C01G
C25B

The present search report has been drawn up for all claims

| Place of search | Date of completion of the search | Examiner |
|---|---|---|
| Munich | 5 March 2025 | King, Ruth |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                         

& : member of the same patent family, corresponding
document

EPO FORM 1503 03.82 (P04C01)

EP 4 707 244 A1

## ANNEX TO THE EUROPEAN SEARCH REPORT
## ON EUROPEAN PATENT APPLICATION NO.

EP 24 19 8565

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | | Publication date | Patent family member(s) | | Publication date |
|---|---|---|---|---|---|
| DE 19842658 | A1 | 01-04-1999 | DE | 19842658 A1 | 01-04-1999 |
| | | | JP | 3452769 B2 | 29-09-2003 |
| | | | JP | H1197076 A | 09-04-1999 |
| DE 19921313 | A1 | 09-11-2000 | AU | 5062800 A | 21-11-2000 |
| | | | CA | 2372973 A1 | 16-11-2000 |
| | | | CN | 1373818 A | 09-10-2002 |
| | | | CZ | 20014013 A3 | 13-03-2002 |
| | | | DE | 19921313 A1 | 09-11-2000 |
| | | | DK | 1190114 T3 | 05-07-2004 |
| | | | EP | 1190114 A1 | 27-03-2002 |
| | | | ES | 2218161 T3 | 16-11-2004 |
| | | | JP | 2002544382 A | 24-12-2002 |
| | | | KR | 20020010144 A | 02-02-2002 |
| | | | SE | 1190114 T3 | 06-07-2004 |
| | | | TW | 546416 B | 11-08-2003 |
| | | | US | 6752918 B1 | 22-06-2004 |
| | | | WO | 0068462 A1 | 16-11-2000 |
| EP 0684324 | A1 | 29-11-1995 | AT | E170936 T1 | 15-09-1998 |
| | | | CA | 2149857 A1 | 25-11-1995 |
| | | | CN | 1121964 A | 08-05-1996 |
| | | | DE | 4418067 C1 | 25-01-1996 |
| | | | EP | 0684324 A1 | 29-11-1995 |
| | | | ES | 2120106 T3 | 16-10-1998 |
| | | | FI | 952484 A | 25-11-1995 |
| | | | JP | H0841668 A | 13-02-1996 |
| | | | KR | 950032715 A | 22-12-1995 |
| | | | NO | 309332 B1 | 15-01-2001 |
| | | | RU | 2153538 C2 | 27-07-2000 |
| | | | TW | 396212 B | 01-07-2000 |
| CN 111477986 | A | 31-07-2020 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1189296 A
- WO 2019191837 A